# EUROPEAN PATENT SPECIFICATION

(11) **EP 4 352 169 B1**
(45) Date of publication and mention of the grant of the patent: **28.10.2026**
(21) Application number: 22732115.5
(22) Date of filing: 02.06.2022
(51) Int. Cl.: C09C 1/50, F23D 14/24

(54) **HOMOGENEOUS HOT COMBUSTION GASES FOR THE PRODUCTION OF CARBON BLACK**
HOMOGENE HEISSE VERBRENNUNGSGASE ZUR HERSTELLUNG VON RUSS
GAZ DE COMBUSTION CHAUDS HOMOGÈNES POUR LA PRODUCTION DE NOIR DE CARBONE

(30) Priority: 10.06.2021 EP 21178723
(43) Date of publication of application: 17.04.2024
(73) Proprietor: Orion Engineered Carbons IP GmbH & Co. KG, 40789 Monheim (DE)
(72) Inventor: SCHINKEL, Arndt-Peter, 56112 Lahnstein (DE); TIMMERMANS, Eddy, 50354 Hürth (DE); AL-ZUHAIRI, Ali, Mechernich (DE)
(74) Representative: f & e patent
(86) International application number: PCT/EP2022/065128
(87) International publication number: WO 2022/258496

(56) References cited:
- EP-A1- 2 192 347
- WO-A2-2011/135579
- US-A- 3 990 854

## Description

### TECHNICAL FIELD

The present invention relates to a reactor as well as a method for manufacturing carbon black. Particularly, the present invention relates to a reactor as well as a method for better mixing fuel and oxygen-containing gases to obtain homogeneous hot combustion gases. A swirling element is used to provide swirled oxygen-containing gas or swirled fuel that is mixed with either combustion fuel or oxygen-containing gas. A homogeneous combustion mixture can be obtained so that it is possible to increase the yield of carbon black and the productivity of the carbon black reactor. The obtained carbon black has highly uniform characteristics.

### TECHNICAL BACKGROUND

The production of carbon black entails the cracking or thermal decomposition of a hydrocarbon feedstock in a reaction chamber at temperatures well above 1000°C (e.g., 2000°C). These high temperatures are obtained by the combustion of a mixture comprising oxygen-containing gas and a combustion fuel (i.e. fuel). The carbon black entrained in the gases exiting the reaction chamber are then cooled in a quenching operation and then collected by any suitable means conventionally used in the art.

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

A key feature for the production of carbon black is the mixing of oxygen-containing gases with the fuel for the combustion as well as the rapid and complete mixing of a hot combustion gas with the carbon black feedstock in order to obtain a hot reaction mixture. The mixture of the oxygen-containing gases and the fuel as well as the hot reaction mixture should be mixed as uniform as possible such that the desired carbon black characteristics also remain highly uniform. Generally, the hot combustion gases contain remaining oxygen after the complete combustion of the fuel. It is desirable that the remaining oxygen is also homogenously distributed in the hot combustion gases.

The continuous supply of oxygen containing-gases can be done in numerous ways. However, it is important to avoid a back flow of the combustion fuel and hot combustion gases into the oxygen-containing gases conduit to avoid undesirable combustions of the mixture for the combustion.

For instance, EP 0 494 068 A2 relates to a reactor and method for producing carbon black which involves arranging the combustion fuel conduits in a circumferential arrangement within the forward wall of the combustion chamber and providing an impact surface on the opposite side of the combustion chamber.

A different approach is described in US 2013/0039840 A1, where oxygen-containing gas is supplied in an orthogonal direction with respect to the longitudinal reactor axis and then rectified (or guided) using a flow guide into the combustion chamber. Accordingly, the air flow is substantially parallel to the longitudinal reactor axis. However, rectified oxygen-containing gases do not homogenously mix with the fuel so that the obtained combustion mixture as well as the hot combustion gases have an inhomogeneous distribution of the oxygen or remaining oxygen.

US 3,990,854 A relates to the production of carbon black and more particularly to a burner and feedstock injection assembly for a carbon black reactor. EP 2,192,347 A1 relates to a swirler arrangement for injecting a fluid into a tubular swirling chamber. WO 2011/135579 A2 relates to a reactor for better mixing carbonaceous feedstock and combustion air while manufacturing carbon black.

Accordingly, the objective of the present invention is to provide a reactor and a method for the production of carbon black, wherein the oxygen-containing gas is homogenously mixed. It is further desired that the remaining oxygen in the hot combustion gas is also homogenously mixed. Moreover, the overall yield of the produced carbon black should be improved as well as the daily production of the carbon black reactor. Furthermore, it is desired that the carbon black characteristics should be highly uniform.

The present invention provides a new and inventive reactor and method for the production of carbon black, wherein swirled oxygen-containing gas or swirled fuel is provided to obtain a homogeneous mixture of an oxygen-containing gas and combustion fuel. It is even possible to maintain the swirl in the combustion and reaction mixture to increase the yield and productivity of the carbon black reactor and to obtain a highly uniform carbon black material.

### SUMMARY OF THE INVENTION

Particularly, this objective can be achieved by a reactor for producing carbon black having a flow passage along a central longitudinal axis of the reactor, and comprising: (i) a combustion chamber for producing hot combustion gases by combustion of a fuel, (ii) a tubular conduit for supplying a first fluid to the combustion chamber, comprising at least one swirling element provided inside the tubular conduit to swirl the first fluid when it flows through the tubular conduit into the combustion chamber, (iii) an injection means for injecting a second fluid into the combustion chamber, and (iv) a reaction chamber subsequent to the combustion chamber, comprising means to inject a feedstock for carbon black into the hot combustion gases received from the combustion chamber to form carbon black, wherein the first fluid is oxygen-containing gas and the second fluid is fuel or the first fluid is fuel and the second fluid is oxygen-containing gas, and wherein the combustion chamber and the tubular conduit are arranged along the central longitudinal axis of the reactor, wherein the reactor further comprises flow guide means connected to the tubular conduit at the remote end from the combustion chamber for altering the flow path of the oxygen-containing gas.

The present invention also concerns a method for producing carbon black comprising: (a) injecting a second fluid by an injection means into a combustion chamber of a reactor, (b) supplying a first fluid along the central longitudinal axis of the reactor through a tubular conduit passing at least one swirling element provided inside the tubular conduit, (c) swirling the first fluid by the at least one swirling element, (d) mixing the second fluid and the swirled first fluid, (e) combusting fuel in the combustion chamber to produce hot combustion gases, (f) receiving the hot combustion gases in a reaction chamber located along the central longitudinal axis of the reactor subsequent to the combustion chamber, and (g) injecting a feedstock for carbon black into the hot combustion gases received from the combustion chamber to form the carbon black in the reaction chamber, wherein the first fluid is oxygen-containing gas and the second fluid is fuel or the first fluid is fuel and the second fluid is oxygen-containing gas, wherein the reactor further comprises flow guide means connected to the tubular conduit at the remote end from the combustion chamber for altering the flow path of the oxygen-containing gas.

Furthermore, the present invention relates to the use of a swirled oxygen-containing gas for the production of carbon black for a better mixing of fuel with the oxygen-containing gas, wherein the oxygen-containing gas entering the flow guide means is rectified in the flow direction and the rectified oxygen-containing gas then pass swirling elements to obtain swirled oxygen-containing gas.

Specific or preferred variants of the reactor or method of the present invention are set forth in the dependent claims and aspects. These and other optional features and advantages of the present invention are described in more detail in the following description, aspects and figures.

### BRIEF DESCRIPTION OF THE DRAWINGS

- Figure 1a:: Section of a swirling element in the x-z-plane
- Figure 1b:: Section of a swirling element in the x-y-plane
- Figure 2:: Reactor for the production of carbon black.
- Figure 3:: Reactor for the production of carbon black including an inflow funnel.
- Figure 4:: Section of the tubular conduit including a fuel lance and a swirling element connected to the inner surface of tubular conduit.
- Figure 5:: Section of the tubular conduit including an inflow funnel, a fuel lance and a swirling element connected to the inner surface of tubular conduit.
- Figure 6:: Section of the tubular conduit including a fuel lance and a swirling element connected to the outer surface of fuel lance.
- Figure 7:: Section of the tubular conduit including an inflow funnel, a fuel lance and a swirling element connected to the outer surface of fuel lance.
- Figure 8:: Section of swirling element having two areas of constant pitches and a smooth connection.
- Figure 9:: Section of swirling element having two areas of constant pitches and a sharp connection.
- Figure 10:: Section of swirling element having a continuous increasing/decreasing pitch.
- Figure 11:: Section of a fuel lance containing three swirling elements having different alignments.
- Figure 12:: Section of a fuel lance containing three swirling elements having different alignments.
- Figure 13:: A multiview projection of a swirling element having one vane attached to the outer surface of the fuel lance.

### DETAILED DESCRIPTION

As mentioned above, the present invention relates to a carbon black reactor and a method for producing carbon black, preferably using the aforementioned carbon black reactor. The present invention is described with reference to the accompanying figures, which do not limit the scope and ambit of the invention.

It must be noted that, as used in the specification and the appended claims, the singular forms "a," "an" and "the" include plural referents unless the context clearly dictates otherwise. Thus, for example, reference to "an oxygen-containing gas" includes mixtures of oxygen-containing gases, reference to "a fuel" includes mixtures of two or more such fuels, and the like.

The "longitudinal axis" refers to an axis extending in the direction of the length (or longitude) of an object. The "lateral axis" refers to an axis extending in the direction of the width of an object. The "transversal axis" refers to an axis extending in the direction of the height of an object. The axes are positioned orthogonal to each other. Accordingly, the term "central longitudinal axis of the reactor" refers to the operative axis extending in the direction of the length of the carbon black reactor. The combustion chamber and the tubular conduit are arranged along the aforementioned central longitudinal axis of the reactor. The longitudinal axis of the tubular conduit and the central longitudinal axis of the reactor can be coaxial.

The term "swirl" refers to a gas flow that have a spin in or along a specific direction such as along an axis. The terms swirl and spin can be used synonymously. Thus, swirled or spined gas flow is a directional rotary movement along an axis. The swirled gas flow according to the present invention has a spin along the central longitudinal axis of the reactor. It is evident that the swirl or spin of a gas can rotate left or right in the flow direction. Depending on the design of the swirling element, the rotation can be adjusted. However, it is desired that the swirling elements and/or vanes are designed so that the rotation of the flow is either left or right and propagates in the flow direction. The rotation axis of the gas is generally substantially coaxial or coaxial to the central longitudinal axis of the reactor or the central longitudinal axis of the tubular conduit.

A gas flow can be swirled by passing swirling elements that are capable to swirl or spin the gas flow. For instance, the swirling elements provide means to induce the aforementioned directional rotary movement along an axis of the gas flow. In the present invention the gas is an oxygen-containing gas or fuel. The swirling elements are descripted in detail below.

The diameter always refers to the inner diameter of an object unless otherwise indicated. For example, the diameter of the tubular conduit refers to the inner diameter of the tubular conduit.

The carbon black reactor has a flow passage along a central longitudinal axis of the reactor and can be a furnace black reactor. The reactor comprises in the following order from upstream to downstream (flow direction) a combustion chamber, a reaction chamber and optionally a quenching chamber. These chambers define a flow passage along the central longitudinal axis of the reactor for the hot combustion gases and the reaction mixture. Thus, the chambers should be in fluid connection, particularly along a central longitudinal axis of the reactor. The tubular conduit is connected to the combustion chamber for supplying oxygen-containing gas that is necessary for the combustion of the fuel (or combustion fuel). The tubular conduit is also arranged along the central longitudinal axis of the reactor so that the supplement of the oxygen-containing gas occurs along the above-mentioned flow passage. Furthermore, the reactor comprises a fuel injection means for injecting the fuel into the combustion chamber.

It is also possible that the aforementioned tubular conduit supplies the fuel and the aforementioned injection means, e.g. a lance supplies the oxygen-containing gas. Thus, the fuel is swirled by the swirling element provided inside the tubular conduit. Accordingly, in general, the reactor comprises a tubular conduit for supplying a first fluid to the combustion chamber, comprising at least one swirling element provided inside the tubular conduit to swirl the first fluid when it flows through the tubular conduit into the combustion chamber and an injection means for injecting a second fluid into the combustion chamber, wherein the first fluid is oxygen-containing gas and the second fluid is fuel or the first fluid is fuel and the second fluid is oxygen-containing gas. In the following, the definitions, particularly of the reactor, the method and the individual components and/or steps, also apply correspondingly for the aforementioned reactor comprising a tubular conduit for supplying a first fluid and an injection means for injecting a second fluid, wherein the first fluid is oxygen-containing gas and the second fluid is fuel or the first fluid is fuel and the second fluid is oxygen-containing gas.

The combustion chamber is connected to the tubular conduit in the downstream to upstream direction so that the oxygen-containing gas can be supplied to the combustion chamber. The combustion chamber is arranged along the central longitudinal axis of the reactor

The combustion chamber is preferably formed of an internal refractory lining covered by a gas tight e.g. metallic covering. The material forming the refractory, and outer lining can be those found conventionally in the art such as the castable refractory Kaocrete^{®} 32-cm which is 70% alumina (Al₂O₃) and has a melting point of about 1870 °C. Additionally, a brick refractory can be relied upon such as RUBY SR (sold by Harrison-Walker Refractories, Pittsburg, PA.) brick refractory which is 84.5% alumina along with 9.8% chromic oxide (Cr₂O₃) and has a melting point of about 2050 °C. The shell or lining is preferably formed of carbon steel except for any piping in contact with hot process air. In those areas, the piping is formed of "316 Stainless Steel".

The combustion chamber is preferably dimensioned as a cylinder. A constricting section can be provided downstream of the combustion chamber. The constriction section has a tapering passageway and converges in an upstream to downstream direction. Preferably, these constriction sections are in the form of a frustoconical passageway. The combustion chamber can also have a tapered in the downstream to upstream direction. Accordingly, the combustion chamber can comprise a zone that is tapered towards the reaction chamber and/or towards the tubular conduit.

Typically, the oxygen-containing gas is preheated to a temperature between 500 °C and 1000 °C, preferably 500 to 900, 500 to 800, 500 to 750, 600 to 900, or 750 to 950, and mixed with the fuel.

Typically, the fuel is preheated to a temperature between 500 °C and 1000 °C, preferably 500 to 900, 500 to 800, 500 to 750, 600 to 900, or 750 to 950, and mixed with the oxygen-containing gas.

The reaction chamber is in connected with the combustion chamber so that the hot combustion gases obtained in the combustion chamber can flow into the reaction chamber. The reaction chamber can be arranged along the central longitudinal axis of the reactor. The diameter of the reaction chamber can be higher than the diameter of the constriction section of the combustion chamber so that the hot combustion gas is able to expand. The expansion section is preferably dimensioned as a cylinder and in communication with the combustion chamber, preferably in the communication with the constriction section of the combustion chamber.

The reaction chamber comprises means to inject the feedstock for carbon black (e.g liquid hydrocarbon, such as a cracker oil or naphtha) into the hot combustion gases. The means to inject the feedstock can comprise a plurality of injection nozzles that are preferably arranged circumferentially with respect to the central longitudinal axis. The circumferential arrangement further improves the uniform characteristics of the carbon black since the feedstock for the carbon black can be homogenously mixed with the hot combustion gases.

The carbon black feedstock (liquid hydrocarbons with high content of aromatic compounds such as creosote, anthracene oil, cat- cracker oils, naphtha cracker oils) can be introduced through a plurality of means to inject the feedstock.

For instance, an axially extending feedstock lance and a radially extending feedstock injectors with nozzles capable of producing a variety of cone shaped sprays (e.g., 15, 30, 45 and 60 degrees cone spray angles) can be implemented.

For producing the desired carbon black characteristics, radially extending feedstock injectors can be provided with shut off valves such that feedstock is only introduced through certain of the feedstock injectors or the flow rate is varied for the feedstock flowing in the injectors.

The reactor can further comprise a quenching chamber (or section) subsequent to the reaction chamber (reaction section) preferably comprising means for injecting a quenching medium into the flow passage along the central longitudinal axis of the reactor located subsequent with respect to the flow direction to inject a feedstock for the carbon black. Alternatively, the quenching chamber can be a quench boiler or heat exchanger.

The quenching chamber/section can comprise means for injecting a quenching medium into the flow passage along the central longitudinal axis of the reactor. The means for injecting a quenching medium are located subsequent with respect to the flow direction to the means to inject a feedstock for the carbon black.

The means for injecting a quenching medium can extend into the quenching chamber. For instance, a cooling fluid conduit or a plurality of radial cooling fluid conduits can be used. The quenching medium, such as a cooling fluid (e.g. water), is sprayed within the quenching chamber to stop the carbon black reaction at the appropriate time and location.

Flow guide means is connected to the tubular conduit at the remote end from the combustion chamber for altering the flow path of the oxygen-containing gas. The flow guide means is preferably configured to receive the oxygen-containing gas from an inlet and cause the received oxygen-containing gas to flow parallel and preferable axisymmetric to the central longitudinal axis of the reactor. In other words, it is preferred that the gas flow is symmetrically distributed with regard to the cross-section of the tubular conduit.

It is also desirable that the inflow funnel is positioned in front of the flow guide means so that the air flow passes the inflow funnel and is then directed to the flow guide means.

For instance, the flow guide means comprises a cylindrical body comprising openings in the wall of the cylindrical body that are substantially orthogonal, preferably orthogonal, to the central longitudinal axis of the reactor and the cylindrical body is in connection with the tubular conduit and positioned along the central longitudinal axis of the reactor. Accordingly, the oxygen-containing gas entering the flow guide means is rectified in the flow direction. The rectified oxygen-containing gas can then pass the swirling elements so that the stability of the swirl of the oxygen-containing gases can be further enhanced.

The reactor further comprises a tubular conduit for supplying oxygen-containing gas to the combustion chamber. The oxygen-containing gas (O₂ containing gas or O₂ containing gas mixture) can be air, oxygen-enriched air, other oxygen containing gases and/or pure oxygen. Accordingly, the tubular conduit is in connection with the combustion chamber so that the oxygen-containing gas is able to flow through the tubular conduit in the combustion chamber. The tubular conduit is arranged along the central longitudinal axis of the reactor. It is desirable that the central longitudinal axis of the tubular conduit is coaxial to the central longitudinal axis of the reactor. Thus, the tubular conduit can be arranged coaxial along the central longitudinal axis of the reactor.

The tubular conduit can have a cylindrical shape that extents along the central longitudinal axis of the reactor without curvatures.

The inner diameter of the tubular conduit can be from 5 cm to 3 m, such as 10 cm to 3 m, 20 cm to 3 m, 9 cm to 2.5 m, 13 cm to 1.5 m, 0.1 m to 2 m, 20 cm to 1 m, 30 cm to 1.5 m, 15 cm to 60 cm, or 15 cm to 90 cm.

The inner diameter is preferably constant for the entire tubular conduit but it is also possible that the tubular conduit has two different sections that are connected with an inflow funnel that reduces the inner diameter of the tubular conduit towards the flow direction (i.e. in the direction of the combustion chamber). Accordingly, the tubular conduit can have a first section having a first inner diameter and a second section having a second inner diameter that is lower than the first inner diameter. The first inner diameter can be in the range from of 5 cm to 3 m, such as 20 cm to 3 m, 9 cm to 2.5 m, 13 cm to 1.5 m, 0.1 m to 2 m, 20 cm to 1 m, 30 cm to 1.5 m, 15 cm to 60 cm or 15 cm to 90 cm and the second inner diameter can be in the range from 5 cm to 3 m, such as 20 cm to 3 m, 9 cm to 2.5 m, 13 cm to 1.5 m, 0.1 m to 2 m, 20 cm to 1 m, 30 cm to 1.5 m, 15 cm to 60 cm or 15 cm to 90 cm. If an inflow funnel is present, the one or more swirling element will be provided between the inflow funnel and the combustion chamber, i.e. in the second section.

Accordingly, the tubular conduit can further comprise an inflow funnel that is located in front of the swirling elements with respect to the flow direction. The inflow funnel can have a frustoconical shape. Thus, the inner diameter of the inflow funnel decreases continuously along the flow direction and thus, decreases from the upstream to the downstream of the reactor. The inner diameter ratio of the maximum inner diameter to the minimum inner diameter of the inflow funnel is in the range of greater than 1 to 3, such as 1.1 to 2 or 1.5 to 2.

Accordingly, the smaller end of the inflow funnel is connected to the tubular conduit in the flow direction. The minimum inner diameter of the inflow funnel corresponds to the inner diameter of the tubular conduit in the inflow flow direction and thus towards the combustion chamber. The maximum inner diameter corresponds to the inner diameter of the tubular conduit from the downstream to the upstream.

The inflow funnel can be used to improve the flow before passing the swirling elements.

The fuel injection means for introducing any suitable combustion fuel (e.g., natural gas, fuel oil or other gaseous or liquid hydrocarbons, preferably natural gas or a fuel oil, or H₂) can be configured in different ways. For example, the injection means can be arranged at the end of the tubular conduit, where the tubular conduit is connected to the combustion chamber. For instance, the injection means are tubular injection pipes arranged circumferentially with respect to the central longitudinal axis of the tubular conduit so that the injection angle of the fuel is substantially orthogonal to the flow direction of the oxygen-containing gas.

Alternatively, the fuel injection means is integrated in and/or coupled with the at least one swirling element. Accordingly, the mixing of the fuel with the oxygen-containing gas takes place directly at the position, where the swirl or spin is induced to the oxygen-containing gas.

However, it is preferred that the fuel injection means is embodied as a fuel lance and extending through the tubular conduit with a gap between the inner surface of the conduit and the outer surface of the fuel lance defining a passageway for the oxygen-containing gas. This arrangement of the fuel injection means further allows a rotationally symmetrical oxygen profile without interfering the gas flow. The fuel lance can be arranged along the central longitudinal axis of the reactor and/or the tubular conduit. Accordingly, the rotationally symmetrical oxygen profile can be further enhanced.

Thus, the swirling element can be provided in said gap so that the swirling element is able to swirl the oxygen-containing gas that is provided through the tubular conduit. This is constructively advantageous. It is preferred that the fuel lance extends coaxially through the tubular conduit.

Moreover, the fuel lance arranged along the central longitudinal axis of the reactor and extending through the tubular conduit can be the only means for supplying fuel to the combustion chamber. Thus, the fuel is injected in the middle of the oxygen-containing gas flow and the mixing of the fuel can be enhanced.

However, it is also possible to provide multiple fuel injection means in addition to the fuel lance. For instance, at the end of the tubular conduit additional fuel injection means are arranged rotationally symmetric with respect to the central longitudinal axis of the tubular conduit.

The end of the fuel lance through where the fuel is injected into the combustion chamber can be arranged substantially flush with the end of the tubular conduit through which the oxygen-containing gas is supplied to the combustion chamber. Alternatively, the fuel lance can be arranged protruded/retracted with respect to the end of the tubular conduit through which the oxygen-containing gas is supplied to the combustion chamber. The distance of the fuel lance in which it can be either protruded/retracted with respect to the end of the tubular conduit can be 5 to 70 cm, preferably 10 to 50 cm, more preferably 20 to 45 cm, and/or up to 1 to 5 times, preferably 1 to 4 times, more preferably 2 to 3 times, the diameter of the tubular conduit at the end of the tubular conduit through which the oxygen-containing gas is supplied to the combustion chamber. The protruded/retracted arrangement of the fuel lance, i.e controlling the position of the combustion, can reduce the material strain due to the high temperatures of the combustion.

The fuel injection means such as the fuel lance may comprise at least one injection opening and/or at least one nozzle, wherein the at least one injection opening and/or at least one nozzle is substantially orthogonal, preferably orthogonal, to the central longitudinal axis of the reactor. They can be arranged at an angle in the range of 70 to 90°, such as 75 to 89°, 80 to 88°, to the central longitudinal axis of the reactor.

The at least one injection opening and/or the at least one nozzle may be arranged circumferentially around the outer wall of the fuel lance. The at least one nozzle can also be positioned at the base area of the fuel lance.

The circumferential arrangement as well as the angle of the at least one injection opening and/or at least one nozzle enables more uniform mixing of the fuel and oxygen-containing gas.

The shape of the fuel injection means such as the fuel lance can be cylindrical. The inner diameter and/or the outer diameter of the fuel injection means such as the fuel lance can be from 0.6 cm to 2.0 m, such as 0.6 cm to 1 m, 1 cm to 1 m, 5 cm to 1 m, 10 cm to 1.0, m, 15 cm to 90 cm, 20 cm to 60 cm, 15 cm to 30 m, 1 cm to 20 cm, or 15 cm to 90 cm. The inner diameter and/or the outer diameter is preferably constant for the entire fuel injection means such as the fuel lance. Generally, the inner diameter and/or the outer diameter of the fuel injection means that is inside the tubular conduit is smaller than the inner diameter of the tubular conduit.

It is evident that the fuel injection means such as the fuel lance is positioned in such a way that the fuel is injected into the swirled oxygen-containing gas. Accordingly, the fuel injection means may comprise inlets or injection openings behind (with respect to the flow direction) the swirling elements.

The tubular conduit according to the present invention comprises at least one swirling element provided inside the tubular conduit to swirl the oxygen-containing gas when it flows through the tubular conduit into the combustion chamber.

Accordingly, the reactor comprises one swirling element or more. Preferably the reactor comprised two or more swirling elements such as 2 to 10, 2 to 5, 2 to 4, 2 to 3, 3 to 5, or 3 to 4. More preferably the reactor comprises two, three or four swirling elements, most preferably two. If multiple swirling elements are present, the swirling elements are attached one after another inside the tubular conduit.

Multiple swirling elements are especially advantageous since an interruption of the swirl can be further prevented. Particularly, it is beneficial that the swirling elements provided in series along the longitudinal axis of the tubular conduit and successively induce the spin/swirl to the oxygen-containing gas. The swirling elements should swirl the oxygen-containing gas in the same rotation such as a left or right swirl.

It is preferred that the swirling elements are positioned in the gap between the inner surface of the conduit and the outer surface of the fuel lance to swirl the oxygen-containing gas when it flows through the tubular conduit into the combustion chamber.

Moreover, when two or more swirling elements are used, they preferably differ in their structure and/or swirl guidance from each other.

Multiple swirling elements may each individually spaced from each other (in the flow direction) such as by a distance in a range of 0 und 300 cm, such as 1 to 300 cm, 1 to 200 cm, 1 to 100 cm, 1 to 70 cm, 10 to 90 cm, 10 to 60 cm, 15 to 40 cm. The distance can be 0 cm. A distance of 0 means that the swirling elements are connected to each other without a gap.

Each of the aforementioned swirling elements (or vane(s)) are normally attached to the inner surface of the tubular conduit or the outer surface of the fuel injection means such as a fuel lance. Accordingly, depending on the particular attachment, a gap between the swirling elements (or vane(s)) and the inner surface of the tubular conduit or the outer surface of the fuel injection means is formed. It is preferred that the gap is small so that most of the oxygen-containing gas must pass the swirling element in order to provide a swirled gas and further enhance the technical effect. Moreover, it is particularly advantageous that the swirling elements (or vane(s)) are attached to the inner surface of the tubular conduit since the back flow of the hot combustion gases can be prevented. The attachment of the swirling elements (or vane(s)) to the outer surface of the fuel injection means provides an advantageous simple construction.

In general, the swirling element is designed that substantially the entire oxygen-containing gas is swirled by passing the elements. For instance, the swirling element comprises vanes, fins or the like that are positions or designed in such a way that substantially the entire oxygen-containing gas is guided by the vanes, fins or the like and a spin or swirl is induced. The gap between a loose end of the at least one swirling element(s) (or vane(s)) and the inner surface of the tubular conduit or the outer surface of the fuel lance, to which the swirling element is not affixed to or integrally formed on, should be not more than 0 mm to 10 cm, such as 0 mm to 10 cm, 0 mm to 1 cm, 0 mm to 5 mm, 0.1 mm to 10 cm, 1 mm to 1 cm, 1 mm to 5 mm, or 1 mm to 2 mm. The ratio of the diameter of the tubular conduit at the gap to the distance of the aforementioned gap between a loose end of the at least one swirling element(s) (or vane(s)) and the inner surface of the tubular conduit or the outer surface of the fuel lance, should be in the range of 0.001 to 30000, such as 0.01 to 3000, 0.5 to 3000, 10 to 3000, 100 to 3000, 100 to 1000, 200 to 2000, 1000 to 3000, 5000 to 20000 or 2000 to 3000. This is particular advantageous since the back flow of the hot combustion gases into the conduit can be further prevented.

The at least one swirling element(s) is/are preferably affixed to or integrally formed on the inner surface of the tubular conduit and/or on the outer surface of the fuel lance. The at least one swirling element(s) is/are preferably replaceable affixed to the inner surface of the tubular conduit and/or on the outer surface of the fuel lance. Replaceable means that the swirling elements can be easy exchanged. This can be done by inserting the swirling elements or vanes through a suitably shaped gap in the tubular conduit and fixing the swirling elements or vane with a fastener such as a screw to the outer wall of the tubular conduit. Accordingly, such a swirling element is replaceable affixed on the inner surface of the tubular conduit.

The swirling element(s) may each individually comprise at least one vane, preferably a plurality of vanes, wherein the plurality of vanes is preferably arranged rotationally symmetric with respect to the central longitudinal axis of the reactor. The vane can alternatively be defined as a fin, rib or blade. As stated above, the vanes preferably arranged in such a way that the oxygen-containing gas is forced to hit the vane so that a spin or swirl is induced.

One possibility to induce swirl or spin is to incline the vane with respect to the central longitudinal axis of the reactor. Incline means that the vane is positioned in such a way that the oxygen-containing gas hits the surface of the vane at the required angle to induce the spin or swirl. The at least one vane can be inclined with respect to the central longitudinal axis of the reactor, preferably in an angle of 10 to 70°, preferably 15 to 60°, more preferably 25 to 55° and most preferably 25 to 50°. The at least one vane can also be inclined with respect to the central longitudinal axis of the reactor, preferably the longitudinal axis of the vane and to the central longitudinal axis of the reactor is inclined in an angle of 10 to 70°, preferably 15 to 60°, more preferably 25 to 55° and most preferably 25 to 50°.

Accordingly, the at least one vane can be inclined with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective vane, wherein preferably the vane is inclined with respect to the central longitudinal axis of the reactor in the aforementioned plane in an angle of 10 to 70°, preferably 15 to 60°, more preferably 25 to 55° and most preferably 25 to 50°. It should be noted that the desired angles of the vanes should generally define the angle of contact with the oxygen-containing gas. Preferably the respective lateral axis is orthogonal to the central longitudinal axis of the reactor and is extending in the direction of the width of the respective vane and through the center of the vane.

The width of the vane is in the direction from the wall of the tubular conduit to the wall of the fuel lance. The length of the vane is in the direction of the flow passage. The dimensions and axes are further explained by means of the accompanying figures.

The side of the at least one vane facing the flow can have a constant pitch and/or a continuous increasing/decreasing pitch along the flow direction with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective vane. Preferably the respective lateral axis is orthogonal to the central longitudinal axis of the reactor and is extending in the direction of the width of the respective vane and through the center of the vane. The at least one vane (or at least one swirling element) can have an area of increasing/decreasing/constant pitch with respect to the surface facing the flow. The at least one vane can have a continuous increasing/decreasing pitch along the flow direction. If the vane has a continuous increasing pitch along the flow direction, the oxygen-containing gas will be swirled in a left rotation. If the vane has a continuous decreasing pitch along the flow direction, the oxygen-containing gas will be swirled in a right rotation. It is particularly preferred that all vanes of a swirling element have an either an increasing pitch or a decreasing pitch. Generally, all vanes of each swirling elements have an either an increasing pitch or a decreasing pitch so that the rotation of the oxygen-containing gas is either left or right. A continuously increasing/decreasing pitch further avoids the interruption of the flow.

Furthermore, the constant pitch and/or the continuous increasing/decreasing pitch along the flow direction as defined above usually refers to an area of the side of the at least one vane facing the flow so that the vane can have rounded corners and edges. Generally, 80 %, 85 %, 90%, 95 % or 99 % of the side of the at least one vane facing the flow can have a constant pitch and/or a continuous increasing/decreasing pitch along the flow direction as defined above.

The vanes can also form a continuous thread along the central longitudinal axis of the reactor. Accordingly, the thread comprises a plurality of windings. Preferably the vane has 2 to 10 windings, such as 2 to 5 windings. The continuous thread may have different pitches, namely a first and a second pitch, wherein the second pitch is larger than the first pitch. The continuous thread may have a constant pitch, and/or the pitch of the continuous thread increases/decreases continuously. The continuous thread along the central longitudinal axis can also formed by adding multiply swirling elements in a row with a distance of 0 cm. A continuous thread has the advantage that the oxygen-containing gas can easily be swirled without flow interruptions since no gaps between the vanes/swirling elements are present.

The shape of the vane can have a planar or curved shape or a combination thereof. Planar means that the pitch of the vane is constant and curved shape means that the pitch increases or decreases constantly.

As mentioned above, more than one swirling element can be present according to the present invention. Thus, the first swirling element can have at least one vane inclined with a first angle with respect to the central longitudinal axis of the reactor in the plane containing the central longitudinal axis of the reactor and a respective transversal axis, and wherein the second swirling element can have at least one vane inclined with a second angle with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective vane, wherein the first angle is greater than the second angle. Preferably the respective lateral axis is orthogonal to the central longitudinal axis of the reactor and is extending in the direction of the width of the respective vane and through the center of the vane. The first swirling element is the element that is closest to the combustion chamber so that the oxygen-containing gas first passes the second swirling element and then the first swirling element. If a third swirling element is present, the oxygen-containing gas will first pass the third swirling element and so on. The angle starting from the highest numbered swirling element to the lowest number increases so that the swirl of the oxygen-containing gas is successively increased. This is in particular preferred since an interruption of the air flow can be prevented. It is preferred that all vanes of each respective swirling element are inclined with the same angle. For instance, all vanes of the first swirling element are inclined with a first angle as defined above and/or all vanes of the second swirling element are inclined with a second angle as defined above. Furthermore, it is evident that the vanes of each respective swirling element should swirl the oxygen-containing gas in the same direction/rotation such as left or right.

The first angle is preferably in the range between 15 to 70°, such as 20 to 60°, 30 to 55°, 35 to 60°, 35 to 55°, or 40 to 50°, and/or the second angle is preferably in the range of 10 to 60°, such as 10 to 55°, 15 to 50°, 20 to 45°, 20 to 40°, or 25 to 35°, and/or the first angle preferably differs from the second angle by at least 5 to 40°, such as 5 to 30°, 8 to 25°, 5 to 20°, or 10 to 20°.

An alternative definition of the inclination of the vane with respect to the tubular conduit and the central longitudinal axis of the reactor is that the length axis of the vane is parallel to the central longitudinal axis of the reactor and then, the specific vane is rotated by the above-defined angles around the respective central lateral axis of the respective vane. An example for a simple vane is a plate or a rectangle plate, such as a metallic plate. This rectangle plate can than rotated by the above-defined angles, such as for the first and/or second angle.

The present invention is also directed to a method for producing carbon black that can be performed in the reactor as mentioned above. Preferably the method is a furnace black process. The Method comprises (a) injecting a fuel by a fuel injection means into a combustion chamber of a reactor, (b) supplying oxygen-containing gas along the central longitudinal axis of the reactor through a tubular conduit passing at least one swirling element provided inside the tubular conduit, (c) swirling the oxygen-containing gas by the at least one swirling element, (d) mixing the injected fuel and the swirled oxygen-containing gas, (e) combusting the fuel in the combustion chamber to produce hot combustion gases, (f) receiving the hot combustion gases in a reaction chamber located along the central longitudinal axis of the reactor subsequent to the combustion chamber, and (g) injecting a feedstock for carbon black into the hot combustion gases received from the combustion chamber to form the carbon black in the reaction chamber. Using the method described above, it is possible to produce carbon black with a greater yield compared to a corresponding manufacturing without swirling the oxygen-containing gas. Accordingly, a carbon black produced according to the inventive method preferably using the inventive reactor can be produced.

The fuel can be injected by a fuel lance arranged along a central longitudinal axis of a reactor and extending through a tubular conduit into a combustion chamber of a reactor and the oxygen-containing gas is supplied through a passageway defined by a gap between the inner surface of the conduit and the outer surface of the fuel lance to the combustion chamber, including swirling the oxygen-containing gas by the at least one swirling element provided in the gap.

The oxygen-containing gas is generally supplied in an amount yielding an excess of oxygen with respect to the amount of oxygen for a complete combustion of the fuel, and/or wherein the oxygen-containing gas is supplied in an amount that the k-value is in a range of 0.01 to 10, such as 0.01 to 1, 0.1 to 1, 0.1 to 5, 1 to 2, 0.7 to 1, or 0.5 to 1. Where the k value is defined by the ratio of stoichiometric O₂ amount that is necessary for the complete stoichiometric combustion of the fuel to the supplied O₂ amount.

The oxygen-containing gas can be guided and/or rectified before providing it into the tubular conduit for supplying the oxygen-containing gas to the combustion chamber.

The swirl of the oxygen-containing gas can also present in the hot combustion gas and in the reaction mixture comprising the carbon black feedstock. Swirled hot combustion gases is particularly preferred since the remaining oxygen in the gases is also homogenously distributed so that reaction of the feedstock material provides uniform carbon black properties and the yield and productivity is increased. Thus, a recirculation of the produced hot combustion gases in the combustion chamber towards the injection end of the fuel lance can be obtained.

The oxygen concentration in the hot combustion gases should be substantially homogeneous or homogeneous across the cross-section of the reaction chamber when injecting the feedstock for carbon black into the hot combustion gases.

Fuel and oxygen-containing gas flow rates are adjusted to give high temperatures and normally fall close to stoichiometric ratios. Ratios must be adjusted to prevent melting the refractory. The range of oxygen-containing flow is quite broad, going, for instance, from a low of approximately 1000 Nm³/h to a high of approximately 100 kNm³/h, such as 1000 Nm³/h to 100 kNm³/h, 1000 Nm³/h to 10 kNm³/h, 2000 Nm³/h to 3000 Nm³/h, or 1000 Nm³/h to 2000 Nm³/h. The invention, however, is not restricted to those dimensions; for larger reactors higher air flows are needed and for smaller reactors lower air flows are needed. However, due to the swirled oxygen-containing gas, the fuel and the oxygen-containing gas can be mixed homogeneously and the temperature distribution of the combustion gases is more desirable so that the refractory is less strained.

The first fluid can be swirled (swirled fluid fluid) and has a swirl number between 0.2 and 1.2, preferably 0.4 to 1.1, more preferably 0.5 to 1.0, even more preferably 0.6 to 0.8. Generally, the swirl intensity is a measure of the angular momentum of the gas. It is characterized by the swirl number, S, defined as the ratio of the axial flux of angular momentum to the axial flux of axial momentum (Gupta et al., 1984).

The second fluid can be swirled (swirled second fluid) and has a swirl number between 0.2 and 1.2, preferably 0.4 to 1.1, more preferably 0.5 to 1.0, even more preferably 0.6 to 0.8. Generally, the swirl intensity is a measure of the angular momentum of the gas. It is characterized by the swirl number, S, defined as the ratio of the axial flux of angular momentum to the axial flux of axial momentum (Gupta et al., 1984).

The fuel can be swirled (swirled fuel) and has a swirl number between 0.2 and 1.2, preferably 0.4 to 1.1, more preferably 0.5 to 1.0, even more preferably 0.6 to 0.8. Generally, the swirl intensity is a measure of the angular momentum of the gas. It is characterized by the swirl number, S, defined as the ratio of the axial flux of angular momentum to the axial flux of axial momentum (Gupta et al., 1984).

The oxygen-containing gas can be swirled (swirled oxygen-containing gas) and has a swirl number between 0.2 and 1.2, preferably 0.4 to 1.1, more preferably 0.5 to 1.0, even more preferably 0.6 to 0.8. Generally, the swirl intensity is a measure of the angular momentum of the gas. It is characterized by the swirl number, S, defined as the ratio of the axial flux of angular momentum to the axial flux of axial momentum (Gupta et al., 1984).

High swirl numbers can be beneficially achieved by using two or more swirling elements arranged in series.

The invention will now be described with reference to the accompanying figures which do not limit the scope and ambit of the invention. The description provided is purely by way of example and illustration. However, specific features exemplified in the figures can be used to further restrict the scope of the invention and claims.

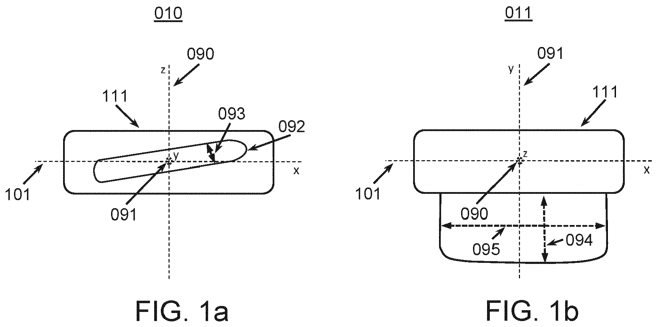

Referring to FIG. 1a and FIG. 1b, therein is illustrated a section of a swirling element in the x-z-plane (010) and a section of a swirling element in the x-y-plane (011).

As mentioned above, the swirling element may comprise vanes that are inclined with respect to the flow direction of reactor along the central longitudinal axis of a reactor. FIG. 1a is a view in the x-z plane of the specific vane (092) attached to a fuel lance (111) inside the tubular conduit (110). The longitudinal axis of the fuel lance (111) is coaxial to the central longitudinal axis of a reactor (101). The central longitudinal axis of a reactor (101) represents the x-axis of the plane in the coordinate system. The coordinate system is a Cartesian coordinate system. The z-axis as well as y-axis in the coordinate system depend on the specific vane (092) that is being considered. The z-axis is the respective transversal axis (090) that is orthogonal to the central longitudinal axis of the reactor (101) and orthogonal to a respective lateral axis (091). The respective lateral axis (091) for the vane (092) that is being considered is the y-axis (091) in the coordinate system. The respective lateral axis (091) is orthogonal to the central longitudinal axis of the reactor (101) and is extending in the direction of the width of the respective vane. The width of the vane (094) and the y-axis (091) extending in the direction of the width of the vane (094) that is being considered is shown in figure 1b. If the angle (or position, alignment, rotation, and/or inclination) of a different vane is considered, another respective lateral axis (z-axis) (090) and respective lateral axis (091) (y-axis) for the considered vane will be used for the coordinate system. In other words, the y- and z-axis depends on the respective vane. Furthermore, the direction of the length (longitude) of the vane (095) extends in the flow direction. The height of the vane (093) is shown in figure 1a. Preferably, the x-values increases or decreases, preferably increases, in the direction of the flow.

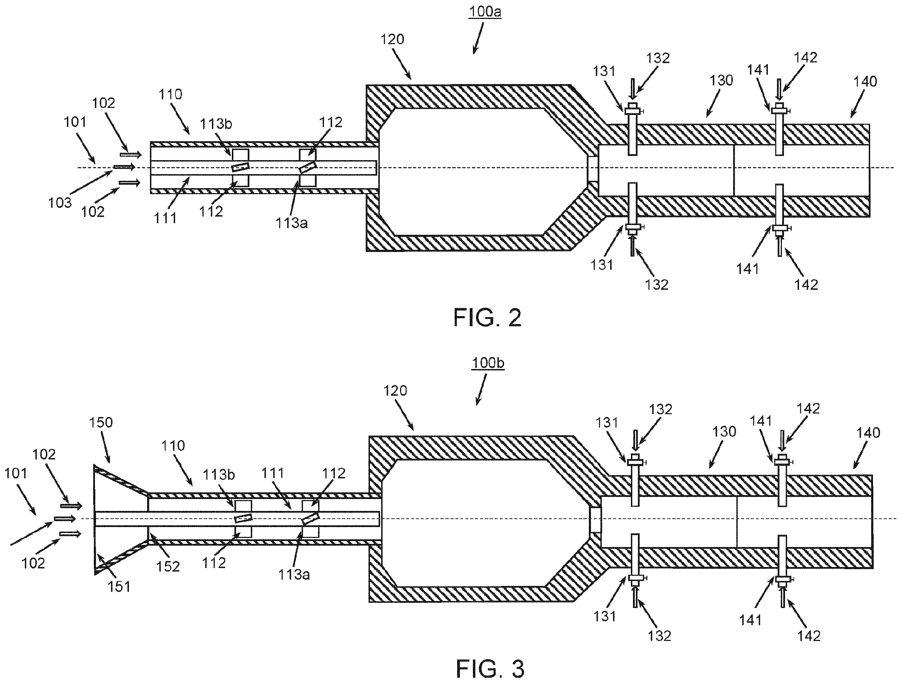

The reactor according to the present invention is generally represented in FIG. 2 by numeral (100a). The reactor according to FIG. 3 is represented by numeral (100b) and differs from the reactor in FIG. 2 in that an inflow funnel (150) is located in front of the swirling elements (113a, 113b). In this case, the tubular conduit (110) is connected with the inflow funnel (150). In the figures it is not shown that the first section of the tubular conduit (110) has a higher diameter than the second section of the tubular conduit (110).

The reactor in FIG. 2 and 3 (100a, 100b) comprise a combustion chamber (120), a reaction chamber (130), and a quenching chamber (140). Moreover, a tubular conduit (110) is connected with the combustion chamber (120). These components are arranged along the central longitudinal axis of the reactor (101) and form a flow passage. The arrows (102) indicate the flow direction of the oxygen-containing gas that is supplied through the tubular conduit (110) to the combustion chamber (120). In these reactors, the fuel injection means are fuel lances (111) provided inside the tubular conduit (110). The fuel lance (111) is arranged along the central longitudinal axis of the reactor (101). The arrow (103) indicates the flow direction of the fuel.

The tubular conduit (110) comprises two swirling elements (113a, 113b) but it is evident that also one or more than two, such as three, swirling elements can be used. The swirling elements (113a, 113b) are located one after the other, wherein the first swirling element (113a) is arranged closest to the combustion chamber (120). The second swirling element (113b) is located in front of the first swirling element (113a) with respect to the flow direction (upstream to downstream). The swirling elements (113a, 113b) comprise a plurality of vanes (112) that are inclined with respect to the central longitudinal axis of the reactor (101). The second swirling element (113b) is inclined with a second angle as already described above. The first swirling element (113a) is inclined with a first angle, wherein the first angle is smaller than the second angle. If the oxygen-containing gas passes the second and then the first swirling elements (113a, 113b), a spin or swirl is induced in the oxygen-containing gas. Behind the swirling elements (113a, 113b) and thus, after the swirl is induced, the fuel is mixed with the swirled oxygen-containing gas.

The reaction chamber (130) comprises a plurality of injection nozzles (131) to inject a hydrocarbon feedstock (132). Moreover, the quenching chamber (140) comprises a plurality of injecting nozzles (141) for injecting a quenching medium (142).

The inflow funnel (150) has a maximum diameter (151) and a minimum diameter (152), wherein the minimum diameter of the inflow funnel (152) corresponds to the diameter of the tubular conduit (110).

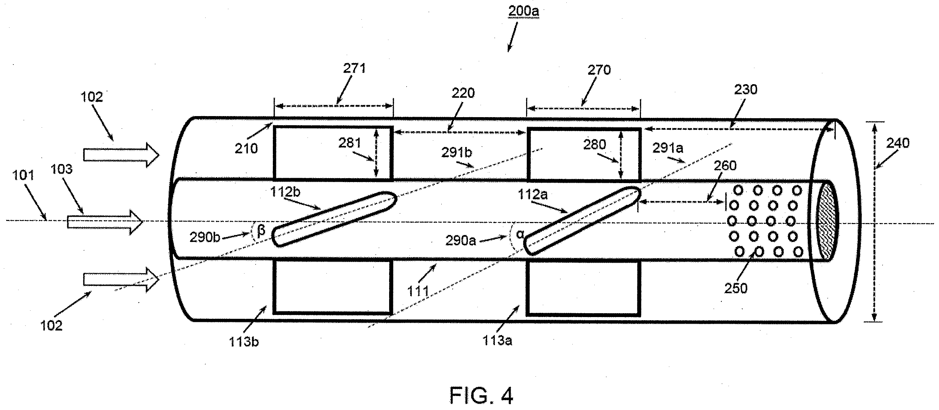

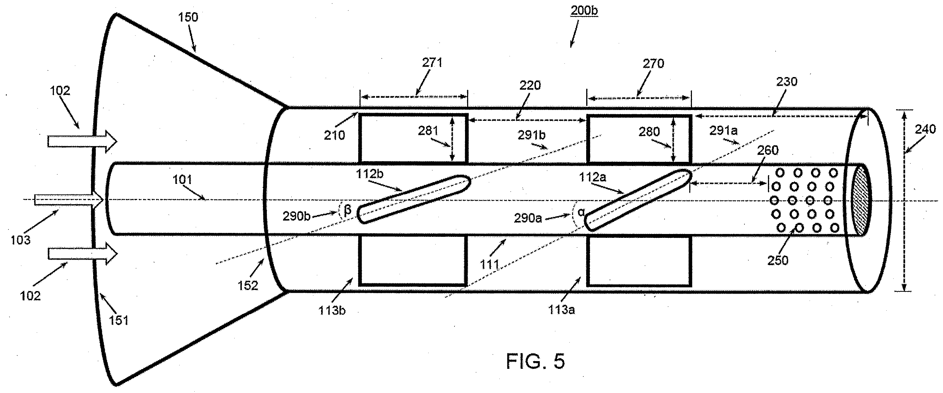

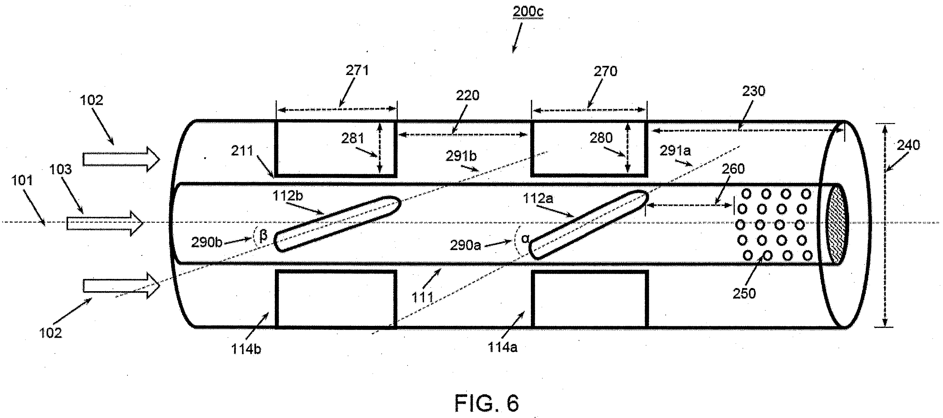

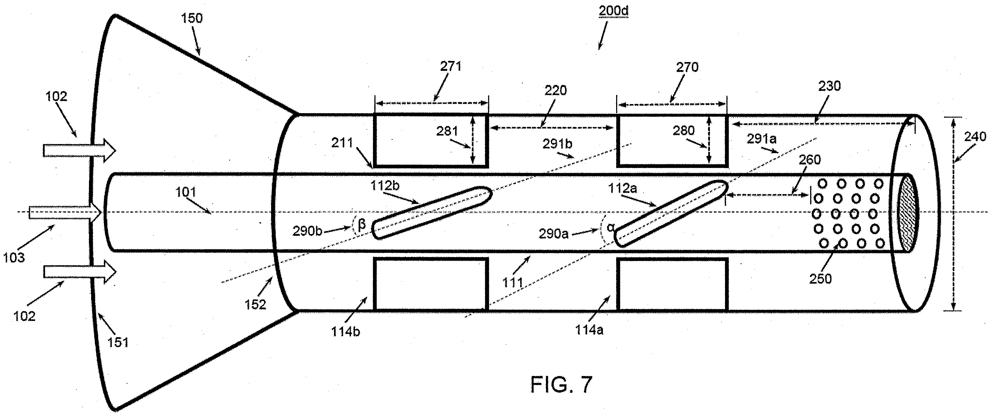

Referring to FIG. 4, FIG. 5, FIG. 6 and FIG. 7, therein are illustrated sections of a tubular conduit including a fuel lance and a swirling element. Particularly, FIG. 4 refers to a section of a tubular conduit including a fuel lance and a swirling element connected to the outer surface of fuel lance (200a). FIG. 5 refers to section of a tubular conduit including an inflow funnel, a fuel lance and a swirling element connected to the outer surface of fuel lance (200b). FIG. 6 refers to a section of a tubular conduit including a fuel lance and a swirling element connected to the inner surface of tubular conduit (200c). FIG. 7 refers to a section of a tubular conduit including an inflow funnel, a fuel lance and a swirling element connected to the inner surface of tubular conduit (200d).

Again, the tubular conduit comprises two swirling elements (113a and 113b or 114a and 114b) that are arranged along the central longitudinal axis of the reactor (101). As mentioned above, FIG. 4 and FIG. 5 reveal a tubular conduit (110), wherein the swirling elements (113a, 113b) are attached to the fuel lance (111). In FIG. 6 and FIG. 7 the swirling elements (114a, 114b) are attached to the inner wall of the tubular conduit (110). In FIG. 5 and FIG. 7 an inflow funnel (150) is in connection with the tubular conduit (110).

In these figures the fuel means are provided as multiply injection openings (250) arranged circumferentially around the outer wall of the fuel lance so that the injection openings (250) are able to inject the fuel in a substantially orthogonal direction with respect to the central longitudinal axis of the reactor (101).

Referring to FIG. 4 and FIG. 5, the vanes (112a) of the first swirling element (113a) and the vanes (112b) of the second swirling element (113b) are attached to the outer wall of the fuel lance (111) so that a gap between a vane and the inner surface of the tubular conduit (210) emerges. In FIG. 6 and FIG. 7, the vanes (112a) of the first swirling element (114a) and the vanes (112b) of the second swirling element (114b) are attached to the outer wall of the fuel lance (111) so that a gap between a vane and the outer surface of the fuel lance (211) emerges. The size of the respective gap should be in the range of 0 mm to 10 cm, such as 0 mm to 10 cm, 0 mm to 1 cm, 0 mm to 5 mm, 0.1 mm to 10 cm, 1 mm to 1 cm, 1 mm to 5 mm, or 1 mm to 2 m, as mentioned above. The gap is preferably as small as possible, i.e. 0 mm, so that most of the oxygen-containing gas is swirled.

The distance between the first and second swirling element (220) can be in the range from 0 und 300 cm, such as 1 to 300 cm, 1 to 200 cm, 1 to 100 cm, 1 to 70 cm, 10 to 90 cm, 10 to 60 cm, 15 to 40 cm. The distance can be 0 cm. The distance between the first swirling element and the end of the tubular conduit connected to the combustion chamber (230) can be in the range from 0 to 2 m, such as 0 to 1.5 m, 1 cm to 1.5 m, 1 cm to 1 m, 1 cm to 60 cm, 10 cm to 60 cm, 15 cm to 40, 5 cm to 30 cm, or 20 cm to 1 m.

The inner diameter of the tubular conduit (240) can be chosen from 5 cm to 3 m, such as 10 cm to 3 m, 20 cm to 3 m, 9 cm to 2.5 m, 13 cm to 1.5 m, 0.1 m to 2 m, 20 cm to 1 m, 30 cm to 1.5 m, 15 cm to 60 cm, or 15 cm to 90 cm, as already described above. The inner diameter of the tubular conduit (240) has an influence of the flow rate of the oxygen-containing gas and should be adjusted depending on the size of the reactor.

The distance between the first swirling element and the fuel inlets (260) can be in the range from 1 cm to 1.5 m, such as 2 cm to 1 m, 10 cm to 1 m, 20 cm to 1 m, or 30 cm to 1 m.

As can be seen from the above-mentioned figures, the vane of the first swirling element (112a) that is closest to the combustion chamber (120) is inclined with respect to the central longitudinal axis of the reactor (101) considering the coordinate system as described above. The first angle of a vane of the first swirling element (290a) between the length axis of the vane of the first swirling element (291a) and the central longitudinal axis of the reactor (101) is higher than the second angle of a vane of the second swirling element (290b) between the length axis of the vane of the second swirling element (291b) and the central longitudinal axis of the reactor (101). It should be noted that the vane is positioned on the fuel lance (111) in such a way that the oxygen-containing gas is swirled in a left rotation in view of the flow direction. However, it is also according to the present invention that the oxygen-containing gas is swirled in a right rotation in view of the flow direction. It is desired that multiply swirling elements induce the swirl in the same direction. A right rotation can be simply obtained by pointing the vanes (112a, 112b) downwards at e.g. the same angle as shown in said figures so that the opposite side of the vane is facing the oxygen-containing gas flow. Nevertheless, it is desired that all vanes and swirling elements provided inside the same tubular conduit induce swirl in the same rotation such as left or right.

The position and alignment of the vanes can also be described with a function in the coordinate system mentioned above, where the z-axis as well as y-axis in the coordinate system depend on the specific vane (092) that is being considered. Particularly, the respective lateral axis (091) for the respective vane (092) is the y-axis (091) in the coordinate system. The respective lateral axis (091) is orthogonal to the central longitudinal axis of the reactor (101) and is extending in the direction of the width of the respective vane. The z-axis is the respective lateral axis (090) that is orthogonal to the central longitudinal axis of the reactor (101) and orthogonal to a respective lateral axis (091). In this Cartesian coordinate system, the x- and z-axes are being considered for the respective vane. The origin in this Cartesian coordinate system can be in a location on the surface of the vane, which is adjacent to the fuel lance or the conduit.

The vanes in figures 1 to 7 have an area of a constant increasing/decreasing pitch expect the rounded corners/edges so that the side of the vane that faces the oxygen-containing gas flow can be described with a function such as f(x) = (-)n*x, wherein n is the pitch and the x-axis is represented by the central longitudinal axis of the reactor (101). The term "(-)" in a formula relates to an alternative negative sign indicating a decreasing pitch. Thus, the minus sign is optional. A continuously increasing/decreasing pitch can be described with f(x) = (-)x^{m} (or f(x) = (-)n*x^{m}), wherein m can be chosen from greater than 1 to 10 such as 2 to 10, 1 to 5, 1 to 3, 1.1 to 5, or 2 to 3. The derivative of the function at a specific point x reveals the pitch of the vane at this position. The function can be shifted in the x-, y- and z-direction, for instance f(x) =(-)n*(x+b)^{m}, where the function is shifted in the x-direction. The pitch of a vane that has a constant pitch or an area of a constant pitch is preferably in the range of 0.09 to 10, 0.17 to 6, 0.26 to 6, 0.26 to 3, or 0.17 to 1.75 without a sign (i.e. absolute value). The maximum pitch of a vane without a constant area of a pitch, such as the pitch increases/decreases constantly, is preferably in the range of 0.09 to 10, 0.17 to 6, 0.26 to 6, 0.26 to 3, 0.17 to 2.74, 0.26 to 1.73, 0.46 to 1.42, 0.46 to 1.2, or 0.17 to 1.75 without a sign (i.e. absolute value). Since the absolute value of the maximum pitch is defined, the maximum pitch describes the continuously increasing as well as the decreasing pitch.

The dimensions of the vanes of each swirling element (113a and 113b or 114a and 114b) can be the same or different. For instance, the length of the vanes (095) of the first swirling element (270) can be in the range from 1 cm to 3 m, such as 5 cm to 2 m, 10 cm to 1 m, 15 cm to 1 m, 20 cm to 90 cm, 25 cm to 1 m, 30 to 60 cm, 40 to 1.5 m, or 35 to 3 m. The length of the vanes (095) of the second swirling element (271) can be in the range from 1 cm to 3 m, such as 5 cm to 2 m, 10 cm to 1 m, 15 cm to 1 m, 20 cm to 90 cm, 25 cm to 1 m, 30 to 60 cm, 40 to 1.5 m, or 35 to 3 m. The width of the vanes (094) of the first swirling element (280) can be in the range from 4 cm to 2.9 m, such as 5 cm to 2.5 m, 9 cm to 2.5 m, 10 cm to 2 m, 20 cm to 2 m, 8 cm to 1 m, 12 cm to 1.4 m, 0.1 m to 2 m, 19 cm to 1 m, 30 cm to 1.5 m, 14 cm to 60 cm, 14 to 59, or 14 cm to 89 cm. The width of the vanes (094) of the second swirling element (281) can be in the range from 4 cm to 2.9 m, such as 5 cm to 2.5 m, 9 cm to 2.5 m, 10 cm to 2 m, 20 cm to 2 m, 8 cm to 1 m, 12 cm to 1.4 m, 0.1 m to 2 m, 19 cm to 1 m, 30 cm to 1.5 m, 14 cm to 60 cm, 14 to 59, or 14 cm to 89 cm. Particularly, the width of the vanes (094) of the swirling elements (280, 281) should be selected to that angular gap between a loose end of the at least one swirling element(s) and the inner surface of the tubular conduit or the outer surface of the fuel lance, to which the swirling element is not affixed to or integrally formed on, is as small as possible such as not more than 0 mm to 10 cm, such as 0 mm to 10 cm, 0 mm to 1 cm, 0 mm to 5 mm, 0.1 mm to 10 cm, 1 mm to 1 cm, 1 mm to 5 mm, or 1 mm to 2 mm, as defined above. It is desired that the shape and dimension of the vane of a specific swirling element are the same. According to the invention, more than two swirl elements are also desirable and the dimensions of vanes of further swirling elements can be selected from the above-mentioned dimensions.

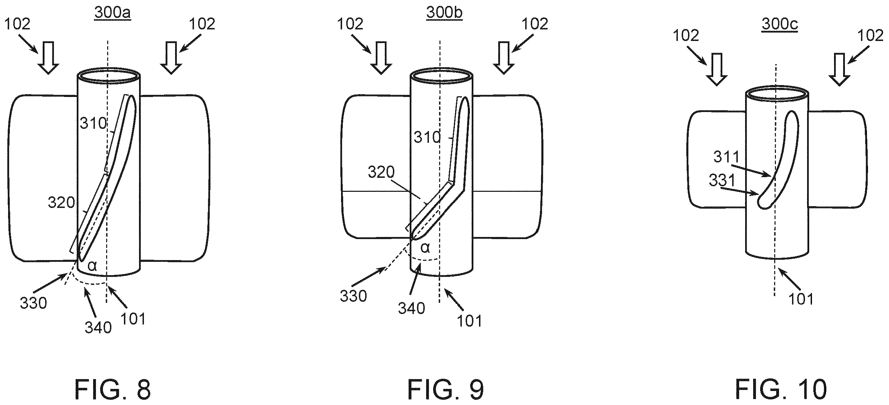

Referring to FIG. 8, FIG. 9, and FIG. 10, therein are illustrated sections of swirling elements. Particularly, FIG. 8 refers to a section of swirling element having two areas of constant pitches with a smooth connection (300a). FIG. 9 refers to a section of swirling element having two areas of constant pitches with a sharp connection (300b). FIG. 10 refers to a section of swirling element having a continuously decreasing pitch (300c). The flow direction is indicated with the arrow showing the passageway for the oxygen-containing gas (102). The areas of pitches refer to the side of the vane facing the flow.

FIG. 8 reveals a swirling element that has a first area of a vane having a first constant pitch (310) and a second area of a vane having a second constant pitch (320). Alternatively, the two areas of pitches can be described as two swirling elements that are attached to each other with a distance of 0 mm so that no gap between the vanes are present. The second area of a vane having a second constant pitch (320) comprises an area of a constant pitch and the length axis of the second area of a vane having a second constant pitch (330). The angle of the length axis of second area of a vane of the first swirling element having a second constant pitch with respect to the central longitudinal axis of the reactor (340) can be the same as defined above, i.e. in an angle of 10 to 70°, preferably 15 to 60°, more preferably 25 to 55° and most preferably 25 to 50. The pitch of the second area of a vane having a second constant pitch (320) can be in the range of 0.09 to 10, 0.17 to 6, 0.26 to 6, 0.26 to 3, 0.17 to 2.74, 0.26 to 1.73, 0.46 to 1.42, 0.46 to 1.2, or 0.17 to 1.75 without a sign (i.e. absolute value).

FIG. 9 differs from FIG.8 in that the first area of a vane having a first constant pitch (310) and the second area of a vane having a second constant pitch (320) is connected at a sharp angle.

The swirling element (300c) shown in FIG. 10 has a continuously decreasing pitch with respect to the side of the vane that faces the oxygen-containing gas flow. Considering the flow direction of the oxygen-containing gas (102), the pitch decreases constantly. The function describing the side facing the oxygen-containing gas and having constantly decreasing pitch can be described with f(x) = n*(-x)². The maximum pitch of the vane (331) is preferably in the range of 0.09 to 10, 0.17 to 6, 0.26 to 6, 0.26 to 3, 0.17 to 2.74, 0.26 to 1.73, 0.46 to 1.42, 0.46 to 1.2, or 0.17 to 1.75 without a sign (i.e. absolute value). Since the absolute value of the maximum pitch is defined, the maximum pitch describes the continuously increasing as well as the decreasing pitch. It should be noted that the maximum pitch as well as the angle of the vane is responsible for the degree of swirl or spin.

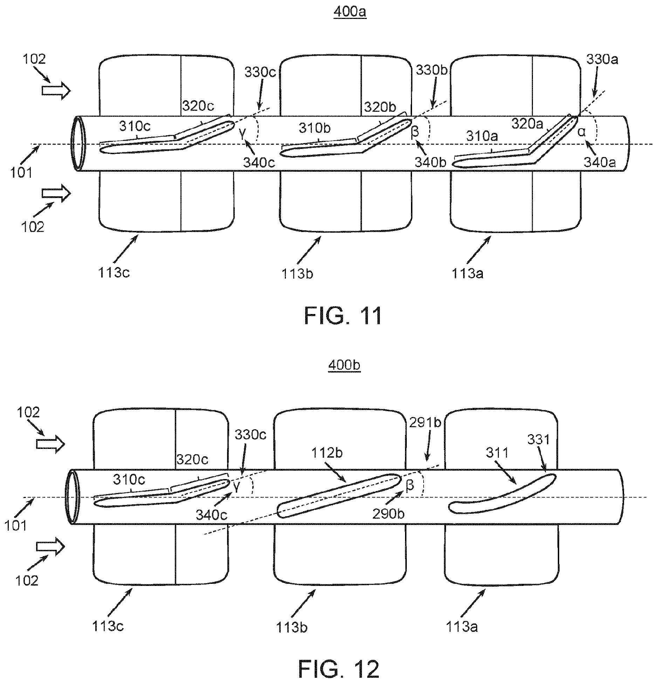

Referring to FIG. 11, and FIG. 12, therein are illustrated a sections section of a fuel lance containing three swirling elements having different alignments (400a, 400b).

Particularly, the aforementioned figures reveal different possible configurations of swirling elements attached to a fuel lance. It is evident that these swirling elements can also be attached to the inner wall of a tubular conduit. Moreover, different arrangement of the different swirling elements is possible.

As can be seen in FIG. 11, three swirling elements are arranged in series. The first swirling that is located closest to the combustion chamber (120) comprises a first area of a vane having a first pitch (310a) and a second area of a vane having a second pitch (320a). The second swirling that is located between the first and third swirling element (113c) comprises a first area of a vane having a first pitch (310b) and a second area of a vane having a second pitch (320b). The third swirling element (113c) comprises a first area of a vane having a first pitch (310c) and a second area of a vane having a second pitch (320c). The angles (340a, 340b and 340c) between each length axis of the second area of the respective vane having a second pitch (330a, 330b, and 330c) and the central longitudinal axis of the reactor (101) increases successively in the flow direction so that the degree of swirl is also successively increased.

In FIG. 12, three different types of swirling elements are attached to the fuel lance. The first swirling element comprises vanes that have a continuous increasing pitch (311) with a maximum pitch (331) at the end of the vane. The second swirling element (112b) has a constant pitch and is inclined with a specific angle (290b) with respect to the length axis of the vane of the second swirling element (291b) and the central longitudinal axis of the reactor (101). The third swirling comprises a first area of a vane having a first pitch (310c) and a second area of a vane having a second pitch (320c). Again, the pitch and/or angle increases successively in the flow direction.

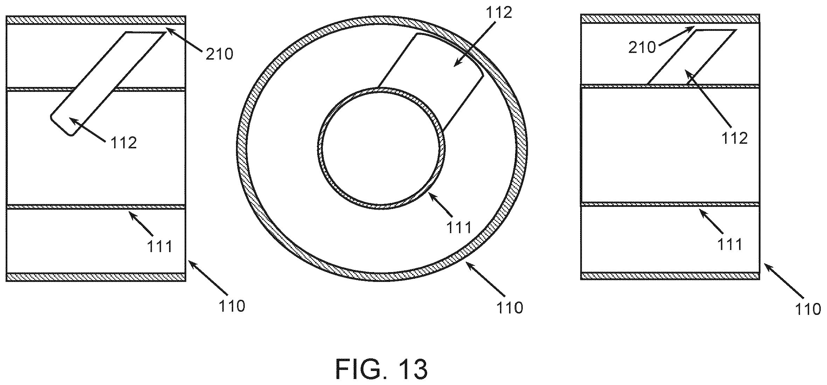

FIG. 13 shows a multiview projection of a swirling element having one vane attached to the outer surface of the fuel lance (112) inside a tubular conduit (110). It is possible to attach multiply vanes to the fuel lance. Preferably, multiply vanes are attached to the fuel lance so that each vane at least partially overlaps with at least a second vane. The vane in FIG. 13 has a continuous increasing pitch (311) but other forms of the vane as described above can be used as desired.

## Claims

1. A reactor for producing carbon black having a flow passage along a central longitudinal axis of the reactor, and comprising:
(i) a combustion chamber for producing hot combustion gases by combustion of a fuel,
(ii) a tubular conduit for supplying a first fluid to the combustion chamber, comprising at least one swirling element provided inside the tubular conduit to swirl the first fluid when it flows through the tubular conduit into the combustion chamber,
(iii) an injection means for injecting a second fluid into the combustion chamber, and
(iv) a reaction chamber subsequent to the combustion chamber, comprising means to inject a feedstock for carbon black into the hot combustion gases received from the combustion chamber to form carbon black,
wherein the first fluid is oxygen-containing gas and the second fluid is fuel or the first fluid is fuel and the second fluid is oxygen-containing gas, and wherein the combustion chamber and the tubular conduit are arranged along the central longitudinal axis of the reactor, wherein the reactor further comprises flow guide means connected to the tubular conduit at the remote end from the combustion chamber for altering the flow path of the oxygen-containing gas.

2. The reactor according to claim 1, wherein the injection means is a fuel injection means, the first fluid is oxygen-containing gas and the second fluid is fuel.

3. The reactor according to claims 1 or 2, wherein the fuel injection means is a fuel lance and extending through the tubular conduit with a gap between the inner surface of the conduit and the outer surface of the fuel lance defining a passageway for the oxygen-containing gas, or wherein the injection means is a lance and extending through the tubular conduit with a gap between the inner surface of the conduit and the outer surface of the lance defining a passageway for the oxygen-containing gas, wherein preferably the lance being arranged along the central longitudinal axis of the reactor.

4. The reactor according to any one of the preceding claims, comprising at least two swirling elements arranged in series along the longitudinal axis of the tubular conduit, preferably the reactor comprises a first and a second swirling element, wherein the first swirling element is arranged closer to the combustion chamber.

5. The reactor according to any one of the preceding claims, wherein the swirling element(s) each individually comprises at least one vane, preferably a plurality of vanes, wherein preferably the at least one vane is inclined with respect to the central longitudinal axis of the reactor, preferably in an angle of 10 to 70°, preferably 15 to 60°, more preferably 25 to 55° and most preferably 25 to 50°, or wherein the at least one vane is inclined with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective vane, wherein preferably the vane is inclined with respect to the central longitudinal axis of the reactor in the aforementioned plane in an angle of 10 to 70°, preferably 15 to 60°, more preferably 25 to 55° and most preferably 25 to 50°.

6. The reactor according to claim 5, wherein the side of the at least one vane facing the flow has a constant pitch and/or a continuous increasing/decreasing pitch along the flow direction with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective vane.

7. The reactor according to claims 4 to 6, wherein the first swirling element has at least one vane inclined with a first angle with respect to the central longitudinal axis of the reactor in the plane containing the central longitudinal axis of the reactor and a respective transversal axis, and wherein the second swirling element has at least one vane inclined with a second angle with respect to the central longitudinal axis of the reactor in the plane containing the central longitudinal axis of the reactor and a respective transversal axis, wherein the respective transversal axis is orthogonal to the central longitudinal axis of the reactor and orthogonal to a respective lateral axis, wherein the respective lateral axis is orthogonal to the central longitudinal axis of the reactor and is extending in the direction of the width of the respective van, wherein the first angle is greater than the second angle, preferably the first angle is in the range between 15 to 70°, such as 20 to 60°, 30 to 55°, 35 to 60°, 35 to 55°, or 40 to 50°, and/or the second angle is in the range of 10 to 60°, such as 10 to 55°, 15 to 50°, 20 to 45°, 20 to 40°, or 25 to 35°, and/or wherein the first angle differs from the second angle by at least 5 to 40°, such as 5 to 30°, 8 to 25°, 5 to 20°, or 10 to 20°.

8. The reactor according to any one of the preceding claims, wherein the tubular conduit further comprises an inflow funnel located in front of the swirling elements with respect to the flow direction, wherein the diameter of the inflow funnel preferably decreases continuously along the flow direction, preferably the diameter ratio of the maximum diameter to the minimum diameter of the inflow funnel is in the range of greater than 1 to 3, such as 1.1 to 2 or 1.5 to 2.

9. The reactor according to any one of the preceding claims, wherein the flow guide means is configured to receive the oxygen-containing gas from an inlet and cause the received oxygen-containing gas to flow parallel to the central longitudinal axis of the reactor.

10. A method for producing carbon black comprising:
(a) injecting a second fluid by an injection means into a combustion chamber of a reactor,
(b) supplying a first fluid along the central longitudinal axis of the reactor through a tubular conduit passing at least one swirling element provided inside the tubular conduit,
(c) swirling the first fluid by the at least one swirling element,
(d) mixing the second fluid and the swirled first fluid,
(e) combusting fuel in the combustion chamber to produce hot combustion gases,
(f) receiving the hot combustion gases in a reaction chamber located along the central longitudinal axis of the reactor subsequent to the combustion chamber, and
(g) injecting a feedstock for carbon black into the hot combustion gases received from the combustion chamber to form the carbon black in the reaction chamber,
wherein the first fluid is oxygen-containing gas and the second fluid is fuel or the first fluid is fuel and the second fluid is oxygen-containing gas, wherein the reactor further comprises flow guide means connected to the tubular conduit at the remote end from the combustion chamber for altering the flow path of the oxygen-containing gas.

11. The method according to claim 10, wherein the injection means is a fuel injection means, the first fluid is oxygen-containing gas and the second fluid is fuel.

12. The method according to claims 10 or 11, wherein the fuel is injected by a fuel lance arranged along a central longitudinal axis of a reactor and extending through a tubular conduit into a combustion chamber of a reactor and the oxygen-containing gas is supplied through a passageway defined by a gap between the inner surface of the conduit and the outer surface of the fuel lance to the combustion chamber, including swirling the oxygen-containing gas by the at least one swirling element provided in the gap, or wherein the oxygen-containing gas is injected by a lance arranged along a central longitudinal axis of a reactor and extending through a tubular conduit into a combustion chamber of a reactor and the fuel is supplied through a passageway defined by a gap between the inner surface of the conduit and the outer surface of the lance to the combustion chamber, including swirling the fuel by the at least one swirling element provided in the gap.

13. The method according to claims 10 to 12, wherein the oxygen concentration in the hot combustion gases is substantially homogeneous across the cross-section of the reaction chamber when injecting the feedstock for carbon black into the hot combustion gases.

14. Use of a swirled oxygen-containing gas for the production of carbon black for a better mixing of fuel with the oxygen-containing gas, wherein the oxygen-containing gas entering the flow guide means is rectified in the flow direction and the rectified oxygen-containing gas then pass swirling elements to obtain swirled oxygen-containing gas.

## Patentansprüche

1. Ein Reaktor zur Herstellung von Ruß, der einen Strömungskanal entlang einer zentralen Längsachse des Reaktors aufweist und umfasst:
(i) eine Brennkammer zur Erzeugung heißer Verbrennungsgase durch Verbrennung eines Brennstoffs,
(ii) eine rohrförmige Leitung zur Zuführung eines ersten Fluids in die Brennkammer, die mindestens ein innerhalb der rohrförmigen Leitung vorgesehenes Verwirbelungselement umfasst, um das erste Fluid zu verwirbeln, wenn es durch die rohrförmige Leitung in die Brennkammer strömt,
(iii) eine Eindüsvorrichtung zum Einspritzen eines zweiten Fluids in die Brennkammer, und
(iv) eine an die Brennkammer nachfolgende Reaktionskammer, die eine Einrichtung zum Einspritzen eines Ausgangsmaterials für Ruß in die von der Brennkammer kommenden heißen Verbrennungsgase umfasst, um Ruß zu bilden,
wobei das erste Fluid ein sauerstoffhaltiges Gas ist und das zweite Fluid Brennstoff ist oder das erste Fluid Brennstoff ist und das zweite Fluid ein sauerstoffhaltiges Gas ist und wobei die Brennkammer und die rohrförmige Leitung entlang der zentralen Längsachse des Reaktors angeordnet sind, wobei der Reaktor ferner eine Strömungsführungseinrichtung umfasst, die an dem von der Brennkammer entfernten Ende mit der rohrförmigen Leitung verbunden ist, um den Strömungsweg des sauerstoffhaltigen Gases zu verändern.

2. Der Reaktor nach Anspruch 1, wobei die Eindüsvorrichtung eine Brennstoffeindüsvorrichtung ist, das erste Fluid ein sauerstoffhaltiges Gas ist und das zweite Fluid Brennstoff ist.

3. Der Reaktor nach Anspruch 1 oder 2, wobei die Brennstoffeindüsvorrichtung eine Brennstofflanze ist, die sich durch die rohrförmige Leitung erstreckt, wobei ein Spalt zwischen der Innenfläche der Leitung und der Außenfläche der Brennstofflanze gebildet wird, der einen Durchgang für das sauerstoffhaltige Gas definiert, oder wobei die Eindüsvorrichtung eine Lanze ist, die sich durch die rohrförmige Leitung erstreckt, wobei ein Spalt zwischen der Innenfläche der Leitung und der Außenfläche der Lanze gebildet wird, der einen Durchgang für das sauerstoffhaltige Gas definiert, wobei die Lanze vorzugsweise entlang der zentralen Längsachse des Reaktors angeordnet ist.

4. Der Reaktor nach irgendeinem der vorstehenden Ansprüche, der mindestens zwei Verwirbelungselemente umfasst, die in Reihe entlang der Längsachse der rohrförmigen Leitung angeordnet sind, wobei der Reaktor vorzugsweise ein erstes und ein zweites Verwirbelungselement umfasst, wobei das erste Verwirbelungselement näher an der Brennkammer angeordnet ist.

5. Der Reaktor nach irgendeinem der vorstehenden Ansprüche, wobei das/die Verwirbelungselement(e) jeweils individuell mindestens eine Schaufel, vorzugsweise mehrere Schaufeln, umfasst/umfassen, wobei die mindestens eine Schaufel vorzugsweise in Bezug auf die zentrale Längsachse des Reaktors geneigt ist, vorzugsweise in einem Winkel von 10 bis 70°, vorzugsweise 15 bis 60°, noch bevorzugter 25 bis 55° und am meisten bevorzugt 25 bis 50°, oder wobei die mindestens eine Schaufel in Bezug auf die zentrale Längsachse des Reaktors in der Ebene geneigt ist, die die zentrale Längsachse des Reaktors und eine jeweilige Querachse enthält, wobei die jeweilige Querachse orthogonal zur zentralen Längsachse des Reaktors und orthogonal zu einer jeweiligen Lateralachse ist, wobei die jeweilige Lateralachse orthogonal zur zentralen Längsachse des Reaktors verläuft und sich in Richtung der Breite der jeweiligen Schaufel erstreckt, wobei die Schaufel vorzugsweise in der vorgenannten Ebene in einem Winkel von 10 bis 70°, vorzugsweise 15 bis 60°, noch bevorzugter 25 bis 55° und am meisten bevorzugt 25 bis 50° in Bezug auf der zentrale Längsachse des Reaktors geneigt ist.

6. Der Reaktor nach Anspruch 5, wobei die der Strömung zugewandte Seite der mindestens einen Schaufel eine konstante Steigung und/oder eine entlang der Strömungsrichtung kontinuierlich ansteigende/abfallende Steigung in Bezug auf die zentrale Längsachse des Reaktors in der Ebene aufweist, die die zentrale Längsachse des Reaktors und eine jeweilige Querachse enthält, wobei die jeweilige Querachse orthogonal zur zentralen Längsachse des Reaktors und orthogonal zu einer jeweiligen Lateralachse ist, wobei die jeweilige Lateralachse orthogonal zur zentralen Längsachse des Reaktors verläuft und sich in Richtung der Breite der jeweiligen Schaufel erstreckt.

7. Der Reaktor nach den Ansprüchen 4 bis 6, wobei das erste Verwirbelungselement mindestens eine Schaufel aufweist, die in der Ebene, die die zentrale Längsachse des Reaktors und eine jeweilige Querachse enthält, unter einem ersten Winkel in Bezug auf die zentrale Längsachse des Reaktors geneigt ist und wobei das zweite Verwirbelungselement mindestens eine Schaufel aufweist, die in der Ebene, die die zentrale Längsachse des Reaktors und eine jeweilige Querachse enthält, unter einem zweiten Winkel in Bezug auf die zentrale Längsachse des Reaktors geneigt ist, wobei die jeweilige Querachse orthogonal zur zentralen Längsachse des Reaktors und orthogonal zu einer jeweiligen Lateralachse ist, wobei die jeweilige Lateralachse orthogonal zur zentralen Längsachse des Reaktors verläuft und sich in Richtung der Breite der jeweiligen Schaufel erstreckt, wobei der erste Winkel größer ist als der zweite Winkel, vorzugsweise der erste Winkel im Bereich von 15 bis 70° liegt, wie beispielsweise 20 bis 60°, 30 bis 55°, 35 bis 60°, 35 bis 55° oder 40 bis 50°, und/oder der zweite Winkel im Bereich von 10 bis 60° liegt, wie beispielsweise 10 bis 55°, 15 bis 50°, 20 bis 45°, 20 bis 40° oder 25 bis 35°, und/oder wobei sich der erste Winkel vom zweiten Winkel um mindestens 5 bis 40° unterscheidet, beispielsweise um 5 bis 30°, 8 bis 25°, 5 bis 20° oder 10 bis 20°.

8. Der Reaktor nach irgendeinem der vorstehenden Ansprüche, wobei die rohrförmige Leitung ferner einen Zuflusstrichter aufweist, der in Strömungsrichtung vor den Verwirbelungselementen angeordnet ist, wobei der Durchmesser des Zuflusstrichters vorzugsweise entlang der Strömungsrichtung kontinuierlich abnimmt, wobei vorzugsweise das Durchmesserverhältnis des maximalen Durchmessers zum minimalen Durchmesser des Zuflusstrichters im Bereich von größer als 1 bis 3 liegt, beispielsweise 1,1 bis 2 oder 1,5 bis 2.

9. Der Reaktor nach irgendeinem der vorstehenden Ansprüche, wobei die Strömungsführungseinrichtung so ausgebildet ist, dass sie das sauerstoffhaltige Gas von einem Einlass aufnimmt und bewirkt, dass das aufgenommene sauerstoffhaltige Gas parallel zur zentralen Längsachse des Reaktors strömt.

10. Ein Verfahren zur Herstellung von Ruß, umfassend:
(a) Eindüsen eines zweiten Fluids mittels einer Eindüsvorrichtung in eine Brennkammer eines Reaktors,
(b) Zuführen eines ersten Fluids entlang der zentralen Längsachse des Reaktors durch eine rohrförmige Leitung, das mindestens ein innerhalb der rohrförmigen Leitung vorgesehenes Verwirbelungselement passiert,
(c) Verwirbeln des ersten Fluids durch das mindestens eine Verwirbelungselement,
(d) Vermischung des zweiten Fluids und des verwirbelten ersten Fluids,
(e) Verbrennen des Brennstoffs in der Brennkammer zur Erzeugung heißer Verbrennungsgase,
(f) Aufnehmen der heißen Verbrennungsgase in einer Reaktionskammer, die entlang der zentralen Längsachse des Reaktors hinter der Brennkammer angeordnet ist, und
(g) Eindüsen eines Ausgangsmaterials für Ruß in die aus der Brennkammer aufgenommenen heißen Verbrennungsgase, um den Ruß in der Reaktionskammer zu bilden,
wobei das erste Fluid ein sauerstoffhaltiges Gas ist und das zweite Fluid Brennstoff ist oder das erste Fluid Brennstoff ist und das zweite Fluid ein sauerstoffhaltiges Gas ist, wobei der Reaktor ferner eine Strömungsführungseinrichtung umfasst, die an dem von der Brennkammer entfernten Ende mit der rohrförmigen Leitung verbunden ist, um den Strömungsweg des sauerstoffhaltigen Gases zu verändern.

11. Das Verfahren nach Anspruch 10, wobei die Eindüsvorrichtung eine Brennstoffeindüsvorrichtung ist, das erste Fluid ein sauerstoffhaltiges Gas ist und das zweite Fluid Brennstoff ist.

12. Das Verfahren nach Anspruch 10 oder 11, wobei der Brennstoff durch eine Brennstofflanze eingedüst wird, die entlang einer zentralen Längsachse eines Reaktors angeordnet ist und sich durch eine rohrförmige Leitung in eine Brennkammer eines Reaktors erstreckt und das sauerstoffhaltige Gas durch einen Durchgang, der durch einen Spalt zwischen der Innenfläche der Leitung und der Außenfläche der Brennstofflanze definiert wird, der Brennkammer zugeführt wird, einschließlich Verwirbeln des sauerstoffhaltigen Gases durch das in dem Spalt vorgesehene mindestens eine Verwirbelungselement, oder wobei das sauerstoffhaltige Gas durch eine Lanze eingedüst wird, die entlang einer zentralen Längsachse eines Reaktors angeordnet ist und sich durch eine rohrförmige Leitung in eine Brennkammer eines Reaktors erstreckt und der Brennstoff durch einen Durchgang, der durch einen Spalt zwischen der Innenfläche der Leitung und der Außenfläche der Lanze definiert wird, der Brennkammer zugeführt wird, einschließlich Verwirbeln des Brennstoffs durch das in dem Spalt mindestens eine Verwirbelungselement.

13. Verfahren nach den Ansprüchen 10 bis 12, wobei die Sauerstoffkonzentration in den heißen Verbrennungsgasen beim Eindüsen des Ausgangsmaterials für Ruß über den Querschnitt der Reaktionskammer hinweg im Wesentlichen homogen ist.

14. Verwendung eines verwirbelten sauerstoffhaltigen Gases zur Herstellung von Ruß, um eine bessere Vermischung des Brennstoffs mit dem sauerstoffhaltigen Gas zu erreichen, wobei das in die Strömungsführungseinrichtung eintretende sauerstoffhaltige Gas in Strömungsrichtung ausgerichtet wird und das ausgerichtete sauerstoffhaltige Gas anschließend Verwirbelungselemente passiert, um ein verwirbeltes sauerstoffhaltiges Gas zu erhalten.

## Revendications

1. Réacteur destiné à la production de noir de carbone, comportant un passage d'écoulement le long d'un axe longitudinal central du réacteur, et comprenant :
(i) une chambre de combustion destinée à produire des gaz de combustion chauds par combustion d'un combustible,
(ii) un conduit tubulaire destiné à acheminer un premier fluide vers la chambre de combustion, comprenant au moins un élément de tourbillonnement disposé à l'intérieur du conduit pour faire tourbillonner le premier fluide lorsqu'il s'écoule dans la chambre de combustion via le conduit tubulaire,
(iii) un moyen d'injection destiné à injecter un second fluide dans la chambre de combustion, et
(iv) une chambre de réaction faisant suite à la chambre de combustion, comprenant un moyen destiné à injecter une matière première pour noir de carbone dans les gaz de combustion chauds reçus à partir de la chambre de combustion, pour former du noir de carbone,
dans lequel le premier fluide est un gaz contenant de l'oxygène et le second fluide est un combustible ou le premier fluide est un combustible et le second fluide est un gaz contenant de l'oxygène, et dans lequel la chambre de combustion et le conduit tubulaire sont disposés le long de l'axe longitudinal central du réacteur, dans lequel le réacteur comprend en outre un moyen de guidage d'écoulement raccordé au conduit tubulaire à l'extrémité éloignée de la chambre de combustion, pour modifier le trajet d'écoulement du gaz contenant de l'oxygène.

2. Réacteur selon la revendication 1, dans lequel le moyen d'injection est un moyen d'injection de combustible, le premier fluide est un gaz contenant de l'oxygène et le second fluide est un combustible.

3. Réacteur selon la revendication 1 ou 2, dans lequel le moyen d'injection de combustible est une lance à combustible et s'étend à l'intérieur du conduit tubulaire, un espace entre la surface interne du conduit et la surface externe de la lance à combustible définissant une voie de passage pour le gaz contenant de l'oxygène, ou dans lequel le moyen d'injection est une lance et s'étend à l'intérieur du conduit tubulaire, un espace entre la surface interne du conduit et la surface externe de la lance définissant une voie de passage pour le gaz contenant de l'oxygène, la lance étant de préférence disposée le long de l'axe longitudinal central du réacteur.

4. Réacteur selon l'une quelconque des revendications précédentes, comprenant au moins deux éléments de tourbillonnement disposés en série le long de l'axe longitudinal du conduit tubulaire, de préférence, le réacteur comprend un premier et un second élément de tourbillonnement, le premier élément de tourbillonnement étant disposé plus près de la chambre de combustion.

5. Réacteur selon l'une quelconque des revendications précédentes, dans lequel l'élément/les éléments de tourbillonnement comprennent chacun individuellement au moins une ailette, de préférence une pluralité d'ailettes, dans lequel, de préférence, ladite au moins une ailette est inclinée par rapport à l'axe longitudinal central du réacteur, de préférence selon un angle de 10 à 70°, de préférence 15 à 60°, plus préférablement 25 à 55° et le plus préférablement 25 à 50°, ou dans lequel ladite au moins une ailette est inclinée par rapport à l'axe longitudinal central du réacteur dans le plan contenant l'axe longitudinal central du réacteur et un axe transversal respectif, dans lequel l'axe transversal respectif est orthogonal à l'axe longitudinal central du réacteur et orthogonal à un axe latéral respectif, dans lequel l'axe latéral respectif est orthogonal à l'axe longitudinal central du réacteur et s'étend dans la direction de la largeur de l'ailette respective, dans lequel, de préférence, l'ailette est inclinée par rapport à l'axe longitudinal central du réacteur dans le plan précité, selon un angle de 10 à 70°, de préférence 15 à 60°, plus préférablement 25 à 55° et le plus préférablement 25 à 50°.

6. Réacteur selon la revendication 5, dans lequel le côté de ladite au moins une ailette faisant face à l'écoulement présente un pas constant et/ou un pas croissant/décroissant en continu le long de la direction d'écoulement par rapport à l'axe longitudinal central du réacteur dans le plan contenant l'axe longitudinal central du réacteur et un axe transversal respectif, dans lequel l'axe transversal respectif est orthogonal à l'axe longitudinal central du réacteur et orthogonal à un axe latéral respectif, dans lequel l'axe latéral respectif est orthogonal à l'axe longitudinal central du réacteur et s'étend dans la direction de la largeur de l'ailette respective.

7. Réacteur selon les revendications 4 à 6, dans lequel le premier élément de tourbillonnement comporte au moins une ailette inclinée selon un premier angle par rapport à l'axe longitudinal central du réacteur dans le plan contenant l'axe longitudinal central du réacteur et un axe transversal respectif, et dans lequel le second élément de tourbillonnement comporte au moins une ailette inclinée selon un second angle par rapport à l'axe longitudinal central du réacteur dans le plan contenant l'axe longitudinal central du réacteur et un axe transversal respectif, dans lequel l'axe transversal respectif est orthogonal à l'axe longitudinal central du réacteur et orthogonal à un axe latéral respectif, dans lequel l'axe latéral respectif est orthogonal à l'axe longitudinal central du réacteur et s'étend dans la direction de la largeur de l'ailette respective, dans lequel le premier angle est supérieur au second angle, de préférence le premier angle se situe dans la plage comprise entre 15 et 70°, telle que 20 et 60°, 30 et 55°, 35 et 60°, 35 à 55°, ou 40 et 50°, et/ou le second angle se situe dans la plage de 10 à 60°, telle que 10 à 55°, 15 à 50°, 20 à 45°, 20 à 40°, ou 25 à 35°, et/ou dans lequel le premier angle diffère du second angle d'au moins 5 à 40°, comme 5 à 30°, 8 à 25°, 5 à 20°, ou 10 à 20°.

8. Réacteur selon l'une quelconque des revendications précédentes, dans lequel le conduit tubulaire comprend en outre un entonnoir d'admission situé en amont des éléments de tourbillonnement par rapport à la direction d'écoulement, dans lequel le diamètre de l'entonnoir d'admission de préférence diminue en continu le long de la direction d'écoulement, de préférence le rapport de diamètres du diamètre maximal au diamètre minimal de l'entonnoir d'admission se situe dans la plage allant de plus de 1 à 3, telle que 1,1 à 2 ou 1,5 à 2.

9. Réacteur selon l'une quelconque des revendications précédentes, dans lequel le moyen de guidage d'écoulement est configuré pour recevoir le gaz contenant de l'oxygène à partir d'une entrée et amener le gaz contenant de l'oxygène reçu à s'écouler parallèlement à l'axe longitudinal central du réacteur.

10. Procédé de production de noir de carbone, comprenant les étapes consistant à :
(a) injecter un second fluide, par un moyen d'injection, dans une chambre de combustion d'un réacteur,
(b) acheminer un premier fluide le long de l'axe longitudinal central du réacteur via un conduit tubulaire en le faisant passer sur au moins un élément de tourbillonnement disposé à l'intérieur du conduit tubulaire,
(c) faire tourbillonner le premier fluide par ledit au moins un élément de tourbillonnement,
(d) mélanger le second fluide et le premier fluide mis en tourbillon,
(e) mettre en combustion du combustible dans la chambre de combustion pour produire des gaz de combustion chauds,
(f) recevoir les gaz de combustion chauds dans une chambre de réaction située le long de l'axe longitudinal central du réacteur à la suite de la chambre de combustion, et
(g) injecter une matière première pour noir de carbone dans les gaz de combustion chauds reçus à partir de la chambre de combustion pour former le noir de carbone dans la chambre de réaction,
dans lequel le premier fluide est un gaz contenant de l'oxygène et le second fluide est un combustible ou le premier fluide est un combustible et le second fluide est un gaz contenant de l'oxygène, dans lequel le réacteur comprend en outre un moyen de guidage d'écoulement raccordé au conduit tubulaire à l'extrémité éloignée de la chambre de combustion pour modifier le trajet d'écoulement du gaz contenant de l'oxygène.

11. Procédé selon la revendication 10, dans lequel le moyen d'injection est un moyen d'injection de combustible, le premier fluide est un gaz contenant de l'oxygène et le second fluide est un combustible.

12. Procédé selon la revendication 10 ou 11, dans lequel le combustible est injecté par une lance à combustible disposée le long d'un axe longitudinal central d'un réacteur et s'étendant via un conduit tubulaire dans une chambre de combustion d'un réacteur et le gaz contenant de l'oxygène est acheminé vers la chambre de combustion à l'intérieur d'une voie de passage définie par un espace entre la surface interne du conduit et la surface externe de la lance à combustible, incluant le tourbillonnement du gaz contenant de l'oxygène par ledit au moins un élément de tourbillonnement disposé dans l'espace, ou dans lequel le gaz contenant de l'oxygène est injecté par une lance disposée le long d'un axe longitudinal central d'un réacteur et s'étendant à l'intérieur d'un conduit tubulaire dans une chambre de combustion d'un réacteur et le combustible est acheminé vers la chambre de combustion via une voie de passage définie par un espace entre la surface interne du conduit et la surface externe de la lance, incluant le tourbillonnement du combustible par ledit au moins un élément de tourbillonnement disposé dans l'espace.

13. Procédé selon les revendications 10 à 12, dans lequel la concentration d'oxygène dans les gaz de combustion chauds est sensiblement homogène sur toute la section transversale de la chambre de réaction lors de l'injection de la matière première pour noir de carbone dans les gaz de combustion chauds.

14. Utilisation d'un gaz contenant de l'oxygène, mis en tourbillon, pour la production de noir de carbone, pour un mélangeage amélioré de combustible avec le gaz contenant de l'oxygène, dans laquelle le gaz contenant de l'oxygène qui entre dans le moyen de guidage d'écoulement est rectifié quant à la direction d'écoulement, et le gaz contenant de l'oxygène, rectifié, passe ensuite sur des éléments de tourbillonnement pour l'obtention de gaz contenant de l'oxygène, mis en tourbillon.
